# FASCICULE DE BREVET EUROPEEN

(11) **EP 3 840 287 B1**
(45) Date de publication et mention de la délivrance du brevet: **18.06.2025**
(21) Numéro de dépôt: 20214776.5
(22) Date de dépôt: 16.12.2020
(51) Int. Cl.: H04L 9/32, H04L 9/08

(54) **PLATEFORME SECURISEE, DECENTRALISEE, AUTOMATISEE ET MULTI-ACTEURS DE GESTION D'IDENTITES D'OBJETS AU TRAVERS DE L'UTILISATION D'UNE TECHNOLOGIE DE CHAINE DE BLOCS**
GESICHERTE DEZENTRALE AUTOMATISIERTE PLATTFORM MIT MEHREREN BETEILIGTEN ZUR VERWALTUNG VON OBJEKTIDENTITÄTEN DURCH DEN EINSATZ VON BLOCKCHAIN-TECHNOLOGIE
DECENTRALISED, AUTOMATED AND MULTI-PLAYER SECURE PLATFORM FOR MANAGING IDENTITIES OF OBJECTS THROUGH THE USE OF BLOCKCHAIN TECHNOLOGY

(30) Priorité: 16.12.2019 FR 1914489
(43) Date de publication de la demande: 23.06.2021
(73) Titulaire: Bull SAS, 78340 Les Clayes-sous-Bois (FR)
(72) Inventeur: HÉBERT, Guillaume, 69003 Lyon (FR); LEPORINI, David, 94150 Rungis (FR)
(74) Mandataire: IPAZ

(56) Documents cités:
- WON JONGHO ET AL: "Decentralized Public Key Infrastructure for Internet-of-Things", MILCOM 2018 - 2018 IEEE MILITARY COMMUNICATIONS CONFERENCE (MILCOM), IEEE, 29 October 2018 (2018-10-29), pages 907 - 913, XP033489288, DOI: 10.1109/MILCOM.2018.8599710
- "Chapter 12: Key Establishment Protocols ED - Menezes A J; Van Oorschot P C; Vanstone S A", 1 October 1996 (1996-10-01), XP001525012, ISBN: 978-0-8493-8523-0, Retrieved from the Internet <URL:http://www.cacr.math.uwaterloo.ca/hac/>

## Description

### DOMAINE TECHNIQUE DE L'INVENTION

La présente invention concerne de manière générale le domaine de la Gestion des Identités et des Accès, et plus particulièrement à l'accès automatisé par des objets, de manière sécurisée, à des services numériques, et la protection des échanges qui s'en suivent.

### ETAT DE LA TECHNIQUE ANTERIEURE

Nous sommes aujourd'hui dans un contexte de plein essor de l'internet des objets (IoT) et de sécurisation de ces objets. Une estimation du marché donne le chiffre de 30 milliards comme nombre d'objets connectés à l'IoT d'ici 2020. C'est pourquoi il est donc important de trouver des solutions IoT répondant au besoin de scalabilité pour répondre à la demande, mais également aux aspects de sécurité pour se prémunir des cyberattaques. Les besoins de sécurité associés aux communications des objets (confidentialité, intégrité, authentification et non répudiation) sont couverts par l'utilisation de mécanismes cryptographiques qui se basent sur des jeux de clés et d'identités numériques. Ce gestionnaire de clés et d'identités représente ainsi le cœur de la sécurité du système. Du point de vue des objets, c'est grâce à ce gestionnaire que l'objet est autorisé à émettre sur un réseau et d'accéder à un service applicatif (identification et authentification de l'objet), qu'il est capable d'émettre des messages chiffrés, intègres et authentifiés et qu'il est capable de déchiffrer les données reçues (cryptographie symétrique/asymétrique).

L'accès automatisé par des objets, de manière sécurisée, à des services numériques, et la protection des échanges qui s'en suivent, nécessitent la mise en place de processus d'enrôlement à la fois pour les fabricants d'objets et pour les objets eux-mêmes, ainsi que leur association aux services numériques en question (« service on-boarding »).

Ces processus doivent répondre aux problématiques telles que l'identification des objets avec une liste d'attributs associés (incluant notamment des identifiants de sécurité tels que des clés cryptographiques), et leur enregistrement dans un référentiel du Fabricant des objets; Le transfert de la propriété et/ou des droits d'exploitation d'un objet d'un Fabricant à un utilisateur de l'objet (par exemple un fournisseur de service utilisant l'objet) ; Le transfert de la propriété et/ou des droits d'exploitation d'un utilisateur à un autre (cas, par exemple, du besoin de réversibilité) ; La mise à jour des attributs liés à l'identité de l'objet par le propriétaire d'un objet et/ou l'entité en charge de ses droits d'exploitation.

De plus, les plateformes qui répondent à ces processus doivent montrer une haute résilience aux pannes, une haute disponibilité et une forte sécurité.

Avec l'essor des objets connectés (IoT), et particulièrement des objets IoT de petite taille et de faible coût, de nouvelles contraintes, propres à ceux-ci, émergent, telle qu'une taille de mémoire réduite, une faible puissance de calcul, une basse consommation et un possible mode hors ligne ou une déconnexion de l'objet.

A toutes ces contraintes techniques s'ajoutent des contraintes légales grandissantes, telles que les nouvelles réglementations en vigueur sur la propriété des données (GDPR) et le Privacy by Design (PvD).

Il existe aujourd'hui plusieurs solutions pour répondre à ces problématiques, à voir les solutions de GIA (Gestion des Identités et des Access) plus communément appelées IAM (Identity Access Management). De nombreuses sociétés de cybersécurité offrent de telles solutions : Active Directory, IBM Security Identity and Access Assurance, Oracle Identity Cloud Service, Okta, Centrify, RSA SecurID Access, Keeper Security, SailPoint, OneLogin, Ping... Néanmoins les différents acteurs de cette liste proposent des solutions centralisées, avec un stockage de données interne qui peut avoir un caractère personnel donc sensible et ainsi ne plus respecter la réglementation GDPR.

Ces solutions proposent généralement un processus technique centralisé habituellement géré par le fournisseur de services ce qui ne permet pas une automatisation, et des accords bipartites préalables entre les fournisseurs de services et les fabricants d'objets, nécessaire pour permettre l'association des objets aux services du fournisseur.

L'objet est déjà enregistré et « appairé avec son Manufacturer / Owner ».

En outre, le document Won Jongho et al, « Decentralized Public Key Infrastructure for Internet-of-Things », MILCOM 2018, pages 907-913, décrit une infrastructure à clés publiques décentralisée pour l'internet des objets, qui utilise des nœuds distribués dans un réseau de chaîne de blocs, à la place d'autorités de certification.

Enfin, ces solutions demandent des capacités de calcul et de stockage suffisamment importantes au niveau de l'objet pour gérer les besoins sécuritaires d'identification et d'authentification au moyen de clés cryptographiques publiques/certificats électroniques. Ces demandes en puissance de calcul, en espace de stockage et en cout énergétique peuvent ne pas être gérées par certains objets IoT qui ont une capacité de calcul et une batterie trop faible pour cela.

### EXPOSE DE L'INVENTION

La présente invention a donc pour objet de proposer un procédé de communication pour la gestion sécurisée de clés et d'identités, permettant de palier au moins une partie des inconvénients de l'art antérieur.

**Ce** but est atteint par un procédé de communication pour la gestion sécurisée de clés et d'identités d'un Objet fabriqué par un Fabricant possédant une bi-clé clé publique Kp, clé privée ou secrète Ks de Fabricant (Ksₘₐₙ,Kpₘₐₙ) et un client possédant une bi-clé Client (Ks_{client},Kp_{client}), caractérisé en ce que la gestion se fait au moins partiellement sur une base de données décentralisée de chaine de blocs, et que le procédé comprend les étapes suivantes :
a) Génération par le Fabricant de deux clés symétriques diversifiées à partir de sa bi-clé et de diversifiants, par exemple sous forme de clés AES 128 bits, les deux clés symétriques étant composées d'une clé de confidentialité K0c et d'une clé d'Identité K0i, puis partage desdites clés avec l'objet .
b) Publication et enregistrement dans la base de données de chaine de blocs de l'identifiant décentralisé (decentralized Identifier, DID) de l'objet et préférentiellement du chiffrement des diversifiants utilisés pour obtenir les deux clés symétriques par une clé publique Kpₘₐₙ: et association du couple identifiant de l'objet avec le chiffrement de la clé publique Kpₘₐₙ et des diversifiants chiffrés pour former l'information DID - Enc(KPₘₐₙ,DIV_C∥DIV_ID)
Et, lorsqu'un Client achète l'objet audit Fabricant, le procédé comprend les étapes d'initialisation suivantes :
c) Fourniture par le Fabricant de l'objet, de l'identifiant de l'objet DID, et des clés symétriques clé de confidentialité K0c et clé d'Identité KOi les clés symétriques étant chiffrées par la clé publique du client Kp_{client}, au client, préférentiellement par un mécanisme , en dehors de la chaine de blocs, dit « off-chain »;
d) Mise à jour de la chaine de blocs de la base de données par publication et *association dans ladite chaine* de blocs du couple identifiant de l'objet (DID) avec la clé publique du client Kp_{client} et le chiffrement de la clé publique client Kp_{client} et des diversifiants chiffrés pour former l'information *DID-Kp_{client} et* Enc(*Kp_{client}*,DIV_C∥DIV_ID) pour que le client puisse pouvoir recalculer les valeurs des clés de l'objet.

- Et, lorsque l'objet est allumé pour la première fois, l'objet s'auto-enrôle selon les étapes suivantes :
   e) Génération de ses nouvelles clés symétriques clé de confidentialité K1c et clé d'Identité K1i par diversification de ses clés anciennes clés K0c, KOi. ;
   f) Auto-enrôlement de l'objet est réalisé par un challenge cryptographique mettant en œuvre la clé d'identité
   g) Envoi par l'objet au client des deux nouveaux diversifiants chiffrés avec la clé publique du client, l'envoi étant réalisé par un mécanisme en dehors de la chaine de blocs, dit « off-chain »
   h) Publication et enregistrement desdits nouveaux diversifiants chiffré avec la clé publique du client dans la chaine de blocs.

Selon une particularité, le procédé comprend en outre une étape préalable à la génération de bi-clés de fabrication par le Fabricant, dans laquelle ledit Fabricant enregistre son identifiant de Fabricant dans la chaine de blocs et publie sa clé publique de Fabricant (Kp*ₘₐₙ*) en l'associant à son identifiant de Fabricant.

Selon une autre particularité, le générateur de bi-clés repose sur des portemonnaies de clés hiérarchiques (Hierarchical Key Wallets) pour fournir les bi-clés de fabrication uniques qui sont diversifiées à partir de la bi-clé du Fabricant.

Selon une autre particularité, les deux clés symétriques générées par le Fabricant sont issues du schéma IES (Integration Encryption Scheme, ou du schéma ECIES (Elliptic Curve Integrated Encryption Scheme), préférentiellement du schéma ECIES, et où le Fabricant génère une bi-clé temporaire dont il utilise la partie publique pour la dérivation desdites deux clés symétriques générées.

Selon une autre particularité, l'objet est transféré d'un propriétaire à un autre en reprenant les étapes d à e.

Selon une autre particularité, le partage ou gestion des droits sur l'objet est opéré par le propriétaire de l'objet au moyen de titres vérifiables (Verifiable Credentials), préférentiellement demandés par les fournisseurs de service (Service Providers) et validés par le propriétaire.

Selon une autre particularité, un système de preuve à divulgation nulle de connaissance, en anglais (ZKP, Zero Knowledge Proof) est mis en place au sein d'un contrat intelligent, en anglais Smart Contract, pour donner des informations sans en dévoiler les valeurs.

**La** présente invention concerne aussi un système de gestion d'identités sécurisées basé sur une chaine de bloc apte à réaliser les étapes d'un processus réalisant :
- L'identification des objets avec une liste d'attributs associés, incluant notamment des identifiants de sécurité tels que des clés cryptographiques, et leur enregistrement dans un référentiel du Fabricant ;
- Le transfert de la propriété et/ou des droits d'exploitation d'un objet d'un Fabricant à un utilisateur de l'objet, par exemple un fournisseur de service utilisant l'objet, par l'enregistrement des nouvelles identités associées à l'objet;
- Le transfert de la propriété et/ou des droits d'exploitation d'un utilisateur à un autre, par l'enregistrement des nouvelles identités associées à l'objet ;
- La mise à jour des attributs liés à l'identité de l'objet par le propriétaire d'un objet et/ou l'entité en charge de ses droits d'exploitation.

**La** présente invention concerne aussi une base de donnée, utilisée par le système de gestion d'identités sécurisées basé sur une chaine de bloc, implémenté sur une plateforme sécurisée, décentralisée, automatisée et multi-acteurs de gestion d'identités d'objets au travers de l'utilisation de la technologie de chaîne de blocs mise en œuvre sur plusieurs nœuds du système avec lesquels la plateforme communique , les nœuds étant responsables du maintien de la chaine de blocs et permettent aux acteurs (et aux objets) de consulter l'état de cette chaine et d'interagir avec cette chaine par l'intermédiaire d'un référentiel (ou registre) commun partagé , chaque nœud ayant accès à un module cryptographique, de préférence physique, en charge du stockage sécurisé de sa clé privée et de l'accès au registre partagé caractérisée en ce que la base de données constitue un référentiel pour chaque fabricant contenant une liste d'attributs associés, incluant notamment des identifiants de sécurité tels que des clés cryptographiques, et soit réalisant leur enregistrement dans le référentiel du Fabricant, soit réalisant la mise à jour des attributs liés à l'identité de l'objet par le propriétaire d'un objet et/ou l'entité en charge de ses droits d'exploitation.

La présente invention concerne aussi une plateforme sécurisée, décentralisée, automatisée et multi-acteurs de gestion d'identités d'objets utilisant une base de données, caractérisée en ce qu'elle gère :
- Le transfert de la propriété et/ou des droits d'exploitation d'un objet ;
- L'enregistrement de preuves de possession d'objet dans le référentiel partagé ;
- L'activation / réactivation d'objets ;

Selon une particularité, la technologie de la chaine de bloc utilisée ne doit pas être d'un type précis et comprend au moins :
- un système de permission, pour identifier et authentifier fortement un acteur ;
- un système de contrôle d'accès, basé sur les identités des utilisateurs ;
- un mécanisme d'anti-rejeu ,
chaque nœud maintenant la chaîne de blocs devant se trouver dans un environnement sécurisé, et l'identité publique de chaque nœud doit être mise à disposition des autres nœuds et acteurs au sein du registre partagé; l'exécution de Smart Contract et de fonctions sur la chaine de blocs étant effectuée dans cette sphère sécurisée, l'enregistrement ayant pour finalité de créer un lien, accessible par tout le monde dans la chaine de blocs, pour permettre de faire correspondre l'acteur et son identité digitale par une bi-clé (clé publique et clé privée) ou par un certificat éventuellement signé par un organisme certifié de gestion d'identités.

La présente invention concerne aussi un système de gestion d'identités sécurisées basé sur une chaine de bloc et apte à réaliser les étapes d'un procédé de communication pour la gestion sécurisée de clés et d'identités, le système comprenant au moins :
un Fabricant, utilisant un système de diversification de clé à partir de diversifiants générés par un générateur de diversifiants, un système de connexion à chaine de blocs, un système d'attribution, à chaque objet sorti de fabrication, d'un identifiant, et un arrangement matériel et logiciel pour envoyer au serveur de chaine de blocs un message de publication et d'enregistrement de *l'association* DID - Enc(Kpₘₐₙ, DIV_C∥DIV_ID).

La présente invention concerne aussi un système de gestion d'identités sécurisées basé sur une chaine de bloc et apte à réaliser les étapes d'un procédé de communication pour la gestion sécurisée de clés et d'identités, le système comprenant au moins
Un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
- Génération de ses nouvelles clés symétriques clé de confidentialité K1c et clé d'Identité K1i par diversification de ses clés anciennes clés K0c, KOi
- Auto-enrôlement par un challenge cryptographique mettant en œuvre la clé d'identité KOi
- Envoi par l'objet au client des deux nouveaux diversifiants chiffré avec la clé publique du client, l'envoi étant réalisé par un mécanisme, en dehors de la base de données de chaines de blocs,
- Publication et enregistrement desdits nouveaux diversifiants chiffré avec la clé publique du client dans la base de données de chaines de blocs

**Selon** une autre particularité, un système de partage de clés de confidentialité est mis en place « off-chain », afin que les opérateurs de service aient accès à l'objet, et donc aux informations relatives.

La présente invention concerne aussi un système de gestion d'identités d'un fournisseur de service d'identité (ID service provider) mettant en œuvre une chaîne de blocs « block-chain » et utilisant les objets enregistrés sur un réseau pour remplir des services applicatifs (SA) dans lesquels les informations fournies par les objets sont utilisées, chaque nœud du réseau du fournisseur de service d'identité a accès à un module cryptographique en charge du stockage sécurisé de sa clé privée, les nœuds possédant des client appelés Acteurs ayant chacun leur propre identité ID_{act} enregistrée dans la chaine de bloc, chaque fabricant d'objet est enregistré dans la chaîne de blocs « block-chain » du fournisseur de service d'identité et leur clé publique sont connues de tous, pour chaque objet vendu ou transféré chaque fabricant fournit l'identifiant de l'objet et le chiffrement des diversifiants utilisé par le fabricant pour le calcul des clés symétriques de chaque objet par publication dans la chaîne de bloc « block-chain », seules les clés symétriques restent stockées en dehors de la chaîne, en l'occurrence dans l'objet ;
Chaque objet étant pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
- Génération dans l'objet de ses nouvelles clés symétriques clé de confidentialité K1c et clé d'Identité K1i par diversification de ses clés anciennes clés K0c, K0i,
- Auto-enrôlement par un challenge cryptographique mettant en œuvre la clé d'identité.
- Envoi par l'objet au client des deux nouveaux diversifiants chiffrés avec la clé publique du client, l'envoi étant réalisé par un mécanisme, en dehors de la chaine de blocs,
- Publication et enregistrement desdits nouveaux diversifiants chiffrés avec la clé publique du client dans la chaine de blocs.

**La** présente invention concerne aussi un objet pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
- Génération dans l'objet de ses nouvelles clés symétriques clé de confidentialité K1c et clé d'Identité K1i par diversification de ses clés anciennes clés K0c, K0i,
- Auto-enrôlement par un challenge cryptographique mettant en œuvre la clé d'identité.
- Envoi par l'objet au client des deux nouveaux diversifiants chiffrés avec la clé publique du client, l'envoi étant réalisé par un mécanisme, en dehors de la chaine de blocs,
- Publication et enregistrement desdits nouveaux diversifiants chiffrés avec la clé publique du client dans la chaine de blocs.

### BREVE DESCRIPTION DES FIGURES

D'autres caractéristiques, détails et avantages de l'invention ressortiront à la lecture de la description qui suit en référence aux figures annexées, qui illustre :
- [Fig. 1], représente un mode de réalisation du procédé de façon schématique.
- [Fig. 2], représente les étapes a) et b) du procédé selon certains modes de réalisation,
- [Fig. 3], représente les étapes c) et d) du procédé selon certains modes de réalisation,
- [Fig. 4], représente, les étapes e), f), g) et h) du procédé selon certains modes de réalisation,

### DESCRIPTION DETAILLEE DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

De manière générale, la présente invention comporte un procédé de communication pour la gestion sécurisée de clés et d'identités d'un Objet fabriqué par un Fabricant possédant une bi-clé clé publique Kp, clé privée ou secrète Ks de Fabricant (Ksₘₐₙ,Kpₘₐₙ) et un client possédant une bi-clé Client (Ks_{client},Kp_{client}), caractérisé en ce que la gestion se fait au moins partiellement sur une base de données décentralisée de chaine de blocs, et que le procédé comprend les étapes suivantes :
a) Génération par le Fabricant de deux clés symétriques diversifiées à partir de sa bi-clé et de diversifiants, par exemple sous forme de clés AES 128 bits, les deux clés symétriques étant composées d'une clé de confidentialité K0c et d'une clé d'Identité K0i, puis partage desdites clés avec l'objet .
b) Publication et enregistrement dans la base de données de chaine de blocs de l'identifiant décentralisé (decentralized Identifier, DID) de l'objet et préférentiellement du chiffrement des diversifiants utilisés pour obtenir les deux clés symétriques par une clé publique Kpₘₐₙ: et association du couple identifiant de l'objet avec le chiffrement de la clé publique Kpₘₐₙ et des diversifiants chiffrés pour former l'information DID - Enc(Kpₘₐₙ, DIV-C∥DIV_ID)
Et, lorsqu'un Client achète l'objet audit Fabricant, le procédé comprend les étapes d'initialisation suivantes :
c) Fourniture par le Fabricant de l'objet, de l'identifiant de l'objet DID, et des clés symétriques clé de confidentialité K0c et clé d'Identité KOi les clés symétriques étant chiffrées par la clé publique du client kp_{client},au client, par un mécanisme , en dehors de la chaine de blocs, dit « off-chain »,
d) Mise à jour de la chaine de blocs de la base de données par publication et association dans ladite chaine de blocs du couple identifiant de l'objet (DID) avec la clé publique du client Kp_{client} et le chiffrement de la clé publique client Kp_{client} et des diversifiants chiffrés pour former l'information *DID-Kp_{client} et* Enc(*Kp_{client},*DIV_C∥DIV_ID)*.* pour que le client puisse pouvoir recalculer les valeurs des clés de l'objet.

Dans certains modes de réalisation, dans le procédé, lorsque l'objet est allumé pour la première fois l'objet s'auto-enrôle selon les étapes suivantes :
e) Génération de ses nouvelles clés symétriques clé de confidentialité K1c et clé d'Identité K1i par diversification de ses clés anciennes clés K0c, KOi. ;
f) Auto-enrôlement de l'objet est réalisé par un challenge cryptographique mettant en œuvre la clé d'identité
g) Envoi par l'objet au client des deux nouveaux diversifiants chiffrés avec la clé publique du client, l'envoi étant réalisé par un mécanisme en dehors de la chaine de blocs, dit « off-chain »
h) Publication et enregistrement desdits nouveaux diversifiants chiffré avec la clé publique du client dans la chaine de blocs.

Avantageusement, La première clé, clé de confidentialité K0c, étant nécessaire pour le chiffrement des données, et la seconde clé, clé d'Identité K0i, étant nécessaire pour l'authentification sur la chaine de blocs.

**Ces** clés peuvent être issues du schéma IES (Integrated Encryption Scheme), où l'on préfèrera utiliser le schéma ECIES (Elliptic Curve Integrated Encryption Scheme) plus adapté à l'IoT que le schéma DLIES (Discrete Logarithm Integrated Encryption Scheme). Dans ce cas de figure, le Fabricant est obligé de générer une bi-clé temporaire et d'utiliser la partie publique pour la dérivation. Ces deux clés symétriques sont calculées par une fonction de dérivation de clé qui prend en argument la clé publique temporaire gt générée par le Fabricant et dérivée à partir de la bi-clé du *Fabricant (g^{f},f)* par un diversifiant.

En d'autres termes, dans ce mode de réalisation, une clé publique temporaire est générée par le fabricant de manière aléatoire. Elle est dérivée à partir de deux objets : la bi-clé du fabricant et un diversifiant. Le résultat de la dérivation avec un premier diversifiant est un nouvel objet : une clé symétrique K de confidentialité. Le résultat de la dérivation avec un second diversifiant est un nouvel objet : une clé symétrique K d'identité.

Dans certains modes de réalisation, chaque publication dans la chaine de blocs équivaut à au moins une transaction dans celle-ci

Le diversifiant DIV pourrait ne pas être publié dans la Blockchain, mais par mesure de sécurité il l'est. En effet cela permet au Fabricant de ne pas stocker la Bi-clé de fabrication, et d'être ainsi obligé de la recalculer au besoin.

Il existe une relation qui permet de faire l'association entre le DID et le DIV. Ainsi, n'importe quel acteur est ainsi capable de retrouver le DIV s'il connait le DID. Le DIV est nécessaire puisqu'il permet au fabricant de recalculer la clé : DIV pour diversifiant. Une clé diversifiée s'obtient à partir d'une clé et d'un diversifiant : la clé est connue du fabricant et le diversifiant est stockée dans la blockchain.

**Dans** certains modes de réalisation, le chiffrement des diversifiants est réalisé avec la clé publique du fabricant (seul le fabricant porteur de la clé privée peut ainsi déchiffrer)

**La** preuve d'appartenance de l'objet se fait intrinsèquement car le propriétaire/fabricant est le seul à posséder la clé privée associée à la clé publique référencée.

Avantageusement, l'objet est capable de s'auto-enrôler et signe le message d'enrôlement avec la clé de fabrication (Ks_{fab}) qu'il est le seul à posséder.

Dans certains modes de réalisation, la fourniture des données, notamment de l'identifiant de l'objet DID, et des clés symétriques clé de confidentialité K0c et clé d'Identité KOi chiffrées, est réalisée par une transmission off-chain.

On entend par une fourniture ou un envoi de données « off-chain », une fourniture ou envoi de données par un mécanisme extérieur à la chaine de blocs, de façon à améliorer la sécurité et la confidentialité de données particulièrement sensibles. On entend par là par exemple un envoi sécurisé par mail, la mise à disposition sur un serveur de stockage sécurisé, l'envoi d'une clé USB avec les données sécurisées, ou encore d'autres moyens possibles envisageables par l'Homme du métier qui répondent à la problématique donnée.

De manière alternative, il serait possible, mais moins sûr, d'envoyer les nouveaux diversifiants lors de l'étape e) directement au Smart Contract qui les chiffre avec la clé publique du client.

Le mécanisme devra impérativement sécuriser ces diversifiants : chiffrement de la donnée par l'émetteur avec la clé publique du destinataire par exemple.

Avantageusement, le chiffrement des clés symétriques est réalisé par le Fabricant.

Avantageusement, le remplacement (mise à jour), c'est-à-dire la publication et enregistrement dans la chaine de blocs est réalisée par une mise à jour de la chaine de blocs (Blockchain) via une transaction. La Blockchain est comme un registre d'état : mis à jour de l'état d'une valeur, donc remplacement via une transaction. L'ancien état est gardé (paradigme blockchain) mais n'est plus à jour.

Dans certains modes de réalisation, l'objet accède au registre partagé via le nœud de son Fabricant, avec sa clé d'Identité KOi qui lui donne les droits nécessaires pour faire le processus d'enrôlement. Cette clé symétrique est connue uniquement du Fabricant, de l'objet et du Client, l'objet est authentifié par la Blockchain : la vérification est faite par le Smart Contract, via un challenge uniquement réalisable par les seuls porteurs de la clé d'identité KOi (p.ex., en utilisant un mécanisme de type HMAC).

Un challenge cryptographique est un mécanisme d'authentification qui met en œuvre un secret, ici une clé. La fonction HMAC citée permet d'authentifier l'émetteur d'une donnée et d'assurer l'intégrité de la donnée.

**On** comprend par base de données décentralisée « blockchain », ou « chaine de de blocs », une base de données décentralisée comprenant un réseau de chaines de blocs, avec des nœuds comprenant tout ou partie du registre de chaine de blocs. Avantageusement, pour garder une trace de toutes les transactions, le réseau de chaines de blocs utilise le registre à chaînes multiples qui est répliqué sur tous les nœuds homologues du réseau de chaines de blocs. La blockchain est une liste de blocs, chacun contenant plusieurs transactions. Chaque bloc a un pointeur sur le bloc précédent et l'ordre et le contenu des blocs sont protégés par des signatures de hachage. Les nœuds d'exploitation de bitcoins construisent de nouveaux blocs à partir des transactions entrantes. Cette construction est rendue difficile à réaliser et nécessite des calculs par minage considérables, la preuve du travail. Les efforts déployés rendent tout aussi difficile de changer des blocs déjà inclus dans la chaine de blocs (blockchain), d'autant plus que changer un bloc au milieu de la chaîne nécessiterait la recréation de tous les blocs suivants. Ainsi, le registre de la chaine de blocs est bien protégé des modifications et peut être considéré comme un enregistrement permanent des transactions. Afin d'inciter à l'effort de minage, les mineurs sont récompensés par les bitcoins nouvellement créés lors de la création d'un bloc. Ils reçoivent également tous les frais de transaction des transactions incluses dans le nouveau bloc.

La technologie de chaîne de blocs est utilisée comme un référentiel partagé et distribué d'identités incluant une liste d'attributs publics associés. Ces identités peuvent, à titre d'illustration, utilisées le format DID défini dans la spécification « Decentralized Identifiers (DIDs) »

Le système ne repose préférentiellement par sur une blockchain publique, et pas sur une blockchain avec un proof of work, qui nécessite de la puissance de calcul et de l'énergie dans un cas d'usage IoT (des objets présentant des contraintes de basse consommation et de faible puissance de calcul). Au contraire, la solution se base préférentiellement sur une blockchain de consortium / blockchain d'entreprise / blockchain à permission /blockchain POK (Proof of Knowledge, preuve de connaissance en français).

L'invention porte sur un système ou une plateforme sécurisée, décentralisée, automatisée et multi-acteurs de gestion d'identités d'objets au travers de l'utilisation d'une technologie de chaîne de blocs. En d'autres termes, sur un système de chaine de blocs afin de bénéficier de ses avantages : scalabilité, réplication, résilience aux pannes/attaques tout en ajoutant une couche supplémentaire pour l'IAM et la GIA lié à l'identité des entités.

Ces modes de réalisations n'ont donc pas besoin d'acteurs supplémentaires, de serveurs annexes, seulement les acteurs directs (Fabricant, Client, Objet), d'une base de données décentralisée blockchain, et potentiellement d'un fournisseur de service. Avantageusement, les nœuds de la chaine de blocs ne sont utilisés que pour stocker des données et les mettre à jour via des transactions effectuées sur ladite chaine de blocs.

Certaines solutions prévoient la présence d'un DM (device Manager), tandis que dans le présent système, l'enregistrement est déjà fait et l'enrôlement sur le réseau est à l'initiative de l'objet. L'objet autonome grâce au DID.

Dans certains modes de réalisation, le procédé comprend en outre une étape préalable à la génération de bi-clés de fabrication par le Fabricant, dans laquelle ledit Fabricant enregistre son identifiant de Fabricant dans la chaine de blocs et publie sa clé publique de Fabricant (Kp*ₘₐₙ*) en l'asssociant à son identifiant de Fabricant.

Dans certains modes de réalisation, le générateur de bi-clés repose sur des portemonnaies de clé hiérarchiques (Hierarchical Key Wallets) pour fournir les bi-clés de fabrication uniques qui sont diversifiées à partir de la bi-clé du Fabricant.

Dans certains modes de réalisation, les deux clés symétriques générées par le Fabricant sont issues du schéma IES (Integration Encryption Scheme, ou du schéma ECIES (Elliptic Curve Integrated Encryption Scheme), préférentiellement du schéma ECIES, et où le Fabricant génère une bi-clé temporaire dont il utilise la partie publique pour la dérivation desdites deux clés symétriques générées.

Dans certains modes de réalisation, l'objet est transféré d'un propriétaire à un autre en reprenant les étapes d à e.

Dans certains modes de réalisation, le partage ou gestion des droits sur l'objet est opéré par le propriétaire de l'objet au moyen de titres vérifiables (Verifiable Credentials), préférentiellement demandés par les fournisseurs de service (Service Providers) et validés par le propriétaire.

Les Verifiable Credentials et les DID Documents (Decentralized IDentifiers) seront utilisés respectivement comme moyen de contrôle d'accès et de format de stockage des informations liés à l'objet sur la chaine de blocs. Le premier permettant de donner les accès en lecture aux informations de l'objet en fonction de l'identité du pair.

Dans certains modes de réalisation, dans le procédé, un système de Preuve à divulgation nulle de connaissance, en anglais (ZKP, Zero Knowledge Proof) est mis en place au sein d'un contrat intelligent, en anglais Smart Contract, pour donner des informations sans en dévoiler les valeurs.

**Le** ZPK est une méthode qui permet à une entité de prouver à une autre qu'une proposition est vraie sans en dévoiler la valeur. Cela permet, dans un souci de préservation des données, de répondre à une question sans dévoiler la valeur. Par exemple, un service peut demander à un objet si sa température est inférieure ou supérieure à 0°C sans que l'objet n'ait à dévoiler la valeur de sa température. Cela permet ainsi une optimisation sur l'utilisation du service, et non dans les étapes.

On entend par Smart Contract ou contrat intelligent un protocole/programme digitale unique et répliqué qui permet d'effectuer des opérations sur la blockchain, et que cela se fasse en respectant des règles bien définies.

Ainsi, toutes les inscriptions/publications dans la chaine de blocs passent par des Smart Contract. Les règles d'accès sont aussi régies par des Smart Contracts.

Divers modes de réalisations décrits portent aussi sur un système de gestion d'identités sécurisées basé sur une chaine de bloc.

Ainsi, dans certains modes de réalisation, un système de gestion d'identités sécurisées basé sur une chaine de blocs est apte à réaliser les étapes d'un processus réalisant :
- L'identification des objets avec une liste d'attributs associés, incluant notamment des identifiants de sécurité tels que des clés cryptographiques, et leur enregistrement dans un référentiel du Fabricant ;
- Le transfert de la propriété et/ou des droits d'exploitation d'un objet d'un Fabricant à un utilisateur de l'objet, par exemple un fournisseur de service utilisant l'objet, par l'enregistrement des nouvelles identités associées à l'objet;
- Le transfert de la propriété et/ou des droits d'exploitation d'un utilisateur à un autre, par l'enregistrement des nouvelles identités associées à l'objet ;
- La mise à jour des attributs liés à l'identité de l'objet par le propriétaire d'un objet et/ou l'entité en charge de ses droits d'exploitation.

Ainsi, il peut être mis en place un système, ou une plateforme sécurisée, décentralisée, automatisée et multi-acteurs de gestion d'identités d'objets au travers de l'utilisation d'une technologie de chaîne de blocs, permettant l'accès automatisé par des objets, de manière sécurisée, à des services numériques, et l'assurance d'une protection des échanges qui s'en suivent.

Divers modes de réalisations décrits portent aussi sur une base de données, utilisée par le système de gestion d'identités sécurisées basé sur une chaine de bloc.

Ainsi, certains modes de réalisation portent sur une base de données, utilisée par le système de gestion d'identités sécurisées basé sur une chaine de bloc, implémenté sur une plateforme sécurisée, décentralisée, automatisée et multi-acteurs de gestion d'identités d'objets au travers de l'utilisation de la technologie de chaîne de blocs mise en œuvre sur plusieurs nœuds du système avec lesquels la plateforme communique, les nœuds étant responsables du maintien de la chaine de blocs et permettent aux acteurs (et aux objets) de consulter l'état de cette chaine et d'interagir avec cette chaine par l'intermédiaire d'un référentiel (ou registre) commun partagé , chaque nœud ayant accès à un module cryptographique, de préférence physique, en charge du stockage sécurisé de sa clé privée et de l'accès au registre partagé caractérisée en ce que la base de données constitue un référentiel pour chaque fabricant contenant une liste d'attributs associés, incluant notamment des identifiants de sécurité tels que des clés cryptographiques, et soit réalisant leur enregistrement dans le référentiel du Fabricant, soit réalisant la mise à jour des attributs liés à l'identité de l'objet par le propriétaire d'un objet et/ou l'entité en charge de ses droits d'exploitation.

**Divers** modes de réalisations décrits portent aussi sur une plateforme sécurisée, décentralisée, automatisée et multi-acteurs de gestion d'identités d'objets utilisant une base de données décentralisée.

Dans certains modes de réalisation, une plateforme sécurisée, décentralisée, automatisée et multi-acteurs de gestion d'identités d'objets utilisant une base de données décentralisée gère :
- Le transfert de la propriété et/ou des droits d'exploitation d'un objet ;
- L'enregistrement de preuves de possession d'objet dans le référentiel partagé ;
- L'activation / réactivation d'objets ;

Dans certains modes de réalisation, la technologie de la chaine de bloc utilisée ne doit pas être d'un type précis. Dans certains modes de réalisation, la technologie de la chaine de bloc utilisée comprend au moins :
- un système de permission, pour identifier et authentifier fortement un acteur ;
- un système de contrôle d'accès, basé sur les identités des utilisateurs ;
- un mécanisme d'anti-rejeu ,
Chaque nœud maintenant la chaîne de blocs devant se trouver dans un environnement sécurisé, et l'identité publique de chaque nœud doit être mise à disposition des autres nœuds et acteurs au sein du registre partagé; l'exécution de Smart Contract et de fonctions sur la chaine de blocs étant effectuée dans cette sphère sécurisée, l'enregistrement ayant pour finalité de créer un lien, accessible par tout le monde dans la chaine de blocs, pour permettre de faire correspondre l'acteur et son identité digitale par une bi-clé, clé publique et clé privée, ou par un certificat éventuellement signé par un organisme certifié de gestion d'identités.

Une attaque par rejeu (en anglais, replay attack ou playback attack) est une forme d'attaque réseau dans laquelle une transmission est malicieusement répétée par un attaquant qui a intercepté la transmission. Il s'agit d'un type d'usurpation d'identité.

Dans certains modes de réalisation, le système comprend au moins :
un Fabricant, utilisant un système de diversification de clé à partir de diversifiants générés par un générateur de diversifiants, un système de connexion à chaine de blocs, un système d'attribution, à chaque objet sorti de fabrication, d'un identifiant, et un arrangement matériel et logiciel pour envoyer au serveur de chaine de blocs un message de publication et d'enregistrement de *l'association* DID - Enc(Kpₘₐₙ,DIV_C∥DIV_ID), le système apte à demander à un fournisseur de service la mise à jour de la chaine de blocs dans la base de données par publication et *association dans ladite chaine de blocs du couple identifiant de l'objet (DID) avec* la clé publique du client Kp_{client} *et le chiffrement de la clé publique client* Kp_{client} et des diversifiants chiffrés pour former l'information *DID-Kpclient et* Enc(*Kp_{client},*DIV_C∥DIV_ID) l'*association DID-DIV et Kp_{client.}.*

L'inscription, aussi appelée personnalisation, est faite une seule et unique fois par le fabricant. L'objet se met à jour de lui-même dans les étapes suivant la fabrication, en l'occurrence notamment lorsqu'il est acheté/cédé.

Le diversifiant DIV pourrait ne pas être publié dans la Blockchain, mais par mesure de sécurité il l'est. En effet cela permet au Fabricant de ne pas stocker la Bi-clé de fabrication, et d'être ainsi obligé de la recalculer au besoin.

Dans certains modes de réalisation, l'objet, une fois acheté, est apte à demander à un fournisseur de service la mise à jour de la chaine de blocs dans la base de données par publication et association dans ladite chaine de blocs du couple identifiant de l'objet (DID) avec la clé publique du client Kp_{client} et le chiffrement de la clé publique client Kp_{client} et des diversifiants chiffrés pour former l'information *DID-Kp_{client}* et Enc(*Kp_{client},*DIV_C∥DIV_ID) l'*association DID-DIV et Kp_{client}.*

Dans certains modes de réalisation, le système comprend au moins :
Un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
- Génération de ses nouvelles clés symétriques clé de confidentialité K1c et clé d'Identité K1i par diversification de ses clés anciennes clés K0c, KOi
- Auto-enrôlement par un challenge cryptographique mettant en œuvre la clé d'identité KOi
- Envoi par l'objet au client des deux nouveaux diversifiants chiffré avec la clé publique du client, l'envoi étant réalisé par un mécanisme, en dehors de la base de données de chaines de blocs,
- Publication et enregistrement desdits nouveaux diversifiants chiffré avec la clé publique du client dans la base de données de chaines de blocs.

Dans certains modes de réalisation, un système de partage de clés de confidentialité est mis en place « off-chain », afin que les opérateurs de service aient accès à l'objet, et donc aux informations relatives.
Dans certains modes de réalisation, un système de gestion d'identités d'un fournisseur de service d'identité (ID service provider) met en œuvre une chaîne de blocs « block-chain » et utilise les objets enregistrés sur un réseau pour remplir des services applicatifs (SA) dans lesquels les informations fournies par les objets sont utilisées, chaque nœud du réseau du fournisseur de service d'identité a accès à un module cryptographique en charge du stockage sécurisé de la clé privée dudit nœud, les nœuds possédant des client appelés Acteurs ayant chacun leur propre identité ID_{act} enregistrée dans la chaine de bloc, chaque fabricant d'objet est enregistré dans la chaîne de blocs « block-chain » du fournisseur de service d'identité et les clés publiques de fabrication des fabricants sont connues de tous, pour chaque objet vendu ou transféré, chaque fabricant fournit l'identifiant de l'objet et un diversifiant utilisé par le fabricant (DID, DIV) pour le calcul des bi-clés de fabrication de chaque objet par le fabricant, et seul l'identifiant de l'objet et la clé publique de fabrication sont publiés dans la chaîne de bloc « block-chain », seule la clé privée de fabrication reste stockée en dehors de la chaîne, en l'occurrence dans l'objet ;
Chaque objet étant pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
   - Génération dans l'objet de ses nouvelles clés symétriques clé de confidentialité K1c et clé d'Identité K1i par diversification de ses clés anciennes clés K0c, K0i,
   - Auto-enrôlement par un challenge cryptographique mettant en œuvre la clé d'identité.
   - Envoi par l'objet au client des deux nouveaux diversifiants chiffrés avec la clé publique du client, l'envoi étant réalisé par un mécanisme, en dehors de la chaine de blocs,
   - Publication et enregistrement desdits nouveaux diversifiants chiffrés avec la clé publique du client dans la chaine de blocs.

Dans certains modes de réalisation, un objet pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
- Génération dans l'objet de ses nouvelles clés symétriques clé de confidentialité K1c et clé d'Identité K1i par diversification de ses clés anciennes clés K0c, K0i,
- Auto-enrôlement par un challenge cryptographique mettant en œuvre la clé d'identité.
- Envoi par l'objet au client des deux nouveaux diversifiants chiffrés avec la clé publique du client, l'envoi étant réalisé par un mécanisme, en dehors de la chaine de blocs,
- Publication et enregistrement desdits nouveaux diversifiants chiffrés avec la clé publique du client dans la chaine de blocs.

Le système comprend ainsi un gestionnaire d'identités sécurisées basé sur une chaine de blocs dans laquelle sont publiées les identités ou le processus permettant de retrouver ces identités. Les nœuds du registre partagé maintiennent ainsi une chaine de blocs et, par extrapolation, le gestionnaire d'identités.

Ainsi, il peut être mis en place un système, ou une plateforme sécurisée, décentralisée, automatisée et multi-acteurs de gestion d'identités d'objets au travers de l'utilisation d'une technologie de chaîne de blocs, permettant l'accès automatisé par des objets, de manière sécurisée, à des services numériques, et l'assurance d'une protection des échanges qui s'en suivent.

Ce système peut être mis en place pour des Objets IoT présentant une faible capacité de calcul, une faible capacité de stockage et/ou des contraintes de faible consommation d'énergie.

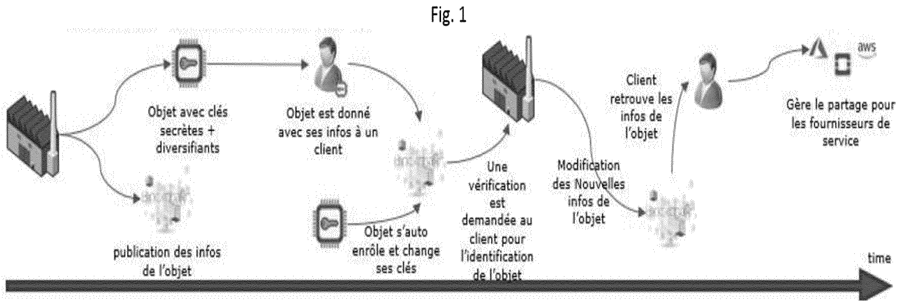

Dans certains modes de réalisation, et en résumé, les fabricants sont enregistrés dans la Blockchain, et leurs clés publiques respectives sont connues de tous. Ils fabriquent et personnalisent des Objets avec des identifiants et des clés de symétriques uniques. Pour chaque objet, ils publient dans la Blockchain l'identifiant de l'objet, et le chiffré des diversifiants utilisés pour la génération. Les objets IoT sont susceptibles de ne pouvoir utiliser que des mécanismes de cryptographie symétrique. Pour s'identifier, ils doivent utiliser des challenges cryptographiques qui impliquent des clés secrètes. Le Client opère l'Objet et doit donc avoir connaissance des clés secrètes, afin de pouvoir communiquer avec l'Objet et gérer les droits d'accès. La figure 1 illustre ainsi cela à titre d'exemple et de manière non limitative en récapitulant les différentes étapes clés de certains modes de réalisation.

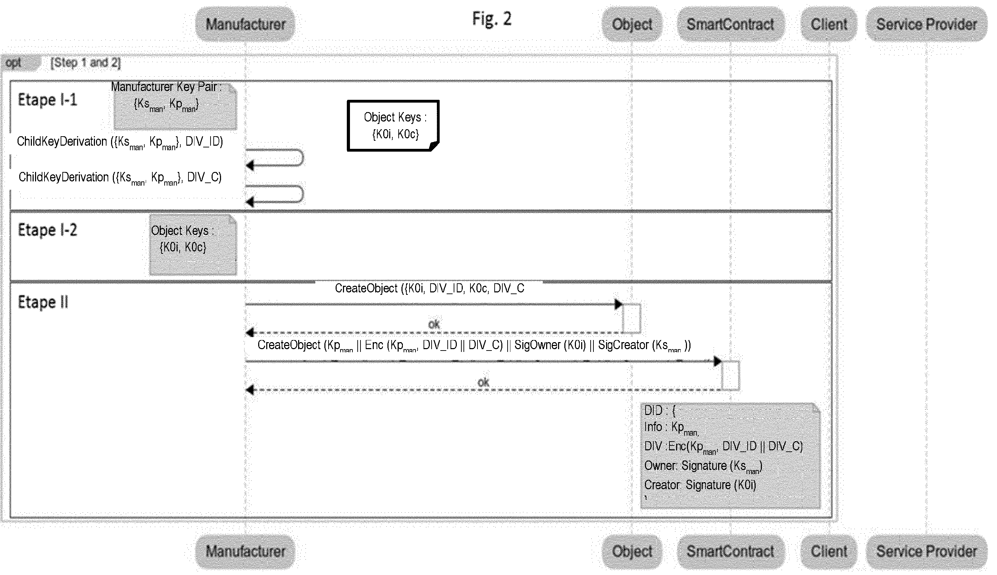

Plus particulièrement, la figure 2 illustre un exemple de mode de réalisation non limitatif de la présente invention, dans lequel sont représentées les étapes a) et b). L'étape a) concerne la génération des deux clés symétriques par le Fabricant, que celui-ci partagera avec l'objet, les deux clés symétriques étant diversifiées à partir de la bi-clé du Fabricant et de diversifiants, par exemple sous forme de clés AES 128 bits, les deux clés symétriques étant composées d'une clé de confidentialité K0c et d'une clé d'Identité KOi (Etape I-1), et l'initialisation de l'objet avec ces clés symétriques (Etape I-2). L'étape b) concerne la publication et enregistrement dans la chaine de blocs du DID et du chiffrement des diversifiants utilisés pour obtenir les deux clés symétriques pour former l'information DID - Enc(Kpₘₐₙ,DIV_C∥DIV_ID) (Etape II). Ainsi le script avec une double signature permet de différencier le propriétaire de l'objet de celui qui a créé l'objet. Cela permet également de contrôler que celui qui écrit cette transaction est bel et bien celui qui a créé l'objet.

Par simplification, la bi-clé temporaire g^{t} qui est un des mécanismes possibles pour la génération de ces clés secrètes, n'apparait pas volontairement dans les schémas et les explications. Il en est de même pour les clés symétriques qui sont des « clés maîtres ». Tous les mécanismes de signature et de chiffrement les impliquant, nécessitent qu'elles soient diversifiées par leurs diversifiants associés.

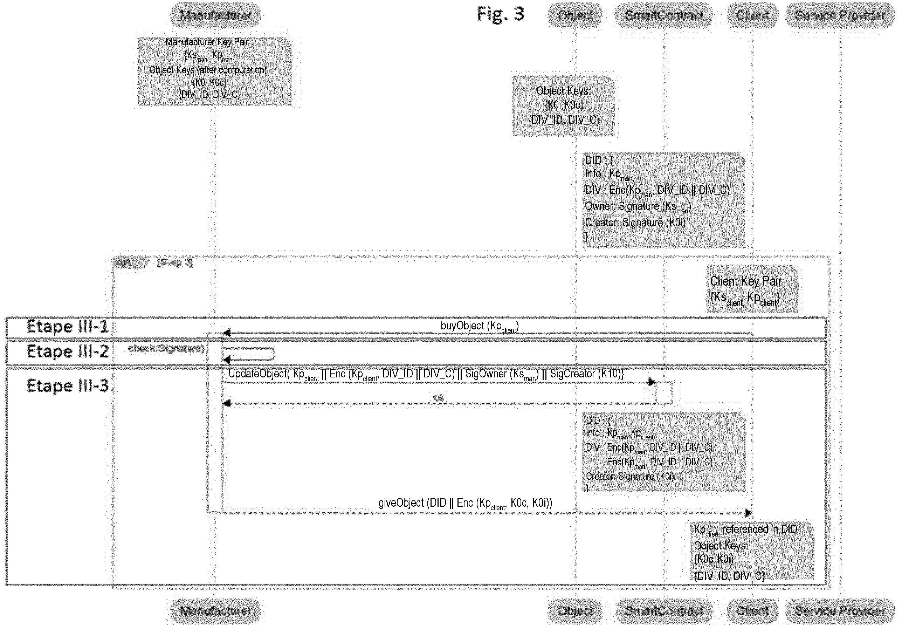

**La** figure 3 illustre un exemple de mode de réalisation non limitatif de la présente invention, dans lequel sont représentées les étapes c) et d) correspondant aux étapes réalisées lorsqu'un Client achète l'objet audit Fabricant (Etape III-1). La fourniture des données par le Fabricant au client par un mécanisme « off-chain » n'est pas représenté. La preuve d'appartenance de l'objet se fait intrinsèquement car le propriétaire est le seul à posséder la clé privée associée à la clé publique référencée. Lors de l'échange entre le Client et le Fabricant, le client prouve qu'il est bien le propriétaire de la clé publique en insérant sa signature (Etape III-2). Le Fabricant met à jour le référentiel commun en publiant la clé publique associée au Client Kp_{client} et le chiffrement de la clé publique client Kp_{client} et des diversifiants chiffrés pour former l'information *DID-Kp_{client}* et Enc(*Kp_{client}*,DIV_C∥DIV_ID) pour que le client puisse pouvoir recalculer les valeurs des clés de l'objet (Etape III-3).

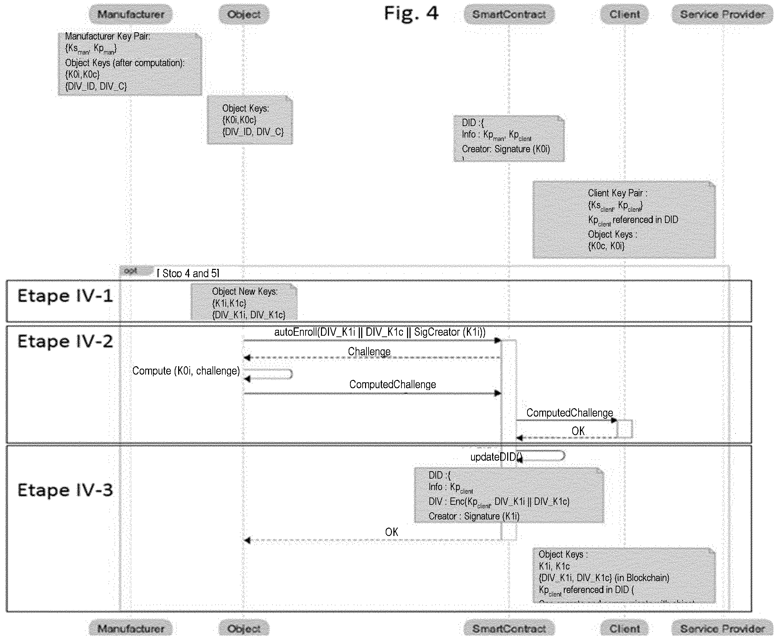

Enfin, la figure 4 illustre un exemple de mode de réalisation non limitatif de la présente invention, dans lequel sont représentées les étapes e), f), g) et h), correspondant aux étapes réalisées lorsque l'objet est allumé pour la première fois, et s'auto-enrôle. En effet, une fois allumé, l'objet réalise la génération de nouvelles clés symétriques (Etape IV-1). L'objet s"auto-enrôle ensuite par un challenge cryptographique mettant en œuvre la clé d'identité KOi (Etape IV-2). L'envoi par l'objet au client des deux nouveaux diversifiants chiffrés avec la clé publique du client, réalisé par un mécanisme en dehors de la chaine de blocs, dit « off-chain », n'est pas représenté sur la figure. Enfin, la publication (Etape IV-3) pour mise à jour de la chaine de blocs desdits nouveaux diversifiants chiffré avec la clé publique du client.

L'auto-enrôlement de l'objet se fait par une passerelle mise à disposition par le fabricant, c'est la seule information connue de l'objet lors de sa mise en route.

**On** comprendra aisément à la lecture de la présente demande que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

## Revendications

1. Procédé de communication pour la gestion sécurisée de clés et d'identités d'un Objet fabriqué par un Fabricant possédant une bi-clé clé publique Kp, clé privée ou secrète Ks de Fabricant (Ksₘₐₙ,Kpₘₐₙ) et un client possédant une bi-clé Client (Ks_{client},Kp_{client}), **caractérisé en ce que** la gestion se fait au moins partiellement sur une base de données décentralisée de chaine de blocs, et que le procédé comprend les étapes suivantes :
a. génération par le Fabricant de deux clés symétriques diversifiées à partir de sa bi-clé et de diversifiants, par exemple sous forme de clés AES 128 bits, les deux clés symétriques étant composées d'une clé de confidentialité K0c et d'une clé d'Identité K0i, puis partage desdites clés avec l'objet,
b. publication et enregistrement dans la base de données de chaine de blocs d'un identifiant décentralisé (decentralized Identifier, DID) de l'objet et du chiffrement des diversifiants utilisés pour obtenir les deux clés symétriques par une clé publique Kpₘₐₙ: et association du couple identifiant de l'objet avec le chiffrement de la clé publique Kpₘₐₙ et des diversifiants chiffrés pour former l'information DID - Enc(Kpₘₐₙ,DIV_C∥DIV_ID)
Et, lorsqu'un Client achète l'objet audit Fabricant, le procédé comprend les étapes d'initialisation suivantes :
c. Fourniture par le Fabricant de l'objet, de l'identifiant de l'objet DID, et des clés symétriques clé de confidentialité K0c et clé d'Identité KOi les clés symétriques étant chiffrées par la clé publique du client Kp_{client},au client, par un mécanisme , en dehors de la chaine de blocs, dit « off-chain »,
d. Mise à jour de la chaine de blocs de la base de données par publication et association dans ladite chaine de blocs du couple identifiant de l'objet *(DID) avec* la clé publique du client Kp_{client} et le chiffrement de la clé publique client Kp_{client} et des diversifiants chiffrés pour former l'information DID-Kp_{client} *et* Enc(Kp_{client},DIV_C∥DIV_ID) pour que le client puisse recalculer les valeurs des clés de l'objet.
Et, lorsque l'objet est allumé pour la première fois, l'objet s'auto-enrôle selon les étapes suivantes :
e. Génération de ses nouvelles clés symétriques clé de confidentialité K1c et clé d'Identité K1i par diversification de ses anciennes clés K0c, KOi ;
f. Auto-enrôlement de l'objet est réalisé par un challenge cryptographique mettant en œuvre l'ancienne clé d'identité
g. Envoi par l'objet au client des deux nouveaux diversifiants chiffrés avec la clé publique du client, l'envoi étant réalisé par un mécanisme en dehors de la chaine de blocs, dit « off-chain »
h. Publication et enregistrement desdits nouveaux diversifiants chiffré avec la clé publique du client dans la chaine de blocs.

2. Procédé de communication selon la revendication 1, qui comprend en outre une étape préalable à la génération de bi-clés de fabrication par le Fabricant, dans laquelle ledit Fabricant enregistre son identifiant de Fabricant dans la chaine de blocs et publie sa clé publique de Fabricant (Kp*ₘₐₙ*) en l'asssociant à son identifiant de Fabricant.

3. Procédé de communication selon l'une quelconque des revendications précédentes, dans lequel le générateur de bi-clés repose sur des porte-monnaies de clé hiérarchiques (Hierarchical Key Wallets) pour fournir les bi-clés du Fabricant et du Client.

4. Procédé de communication selon l'une quelconque des revendications précédentes, dans lequel les deux clés symétriques générées par le Fabricant sont issues du schéma IES (Integration Encryption Scheme, ou du schéma ECIES (Elliptic Curve Integrated Encryption Scheme), préférentiellement du schéma ECIES, et où le Fabricant génère une bi-clé temporaire dont il utilise la partie publique pour la dérivation desdites deux clés symétriques générées.

5. Procédé de communication selon l'une quelconque des revendications précédentes, dans lequel l'objet est transféré d'un propriétaire à un autre en reprenant les étapes d à e.

6. Procédé de communication selon l'une quelconque des revendications précédentes, dans lequel le partage ou gestion des droits sur l'objet est opéré par le propriétaire de l'objet au moyen de titres vérifiables (Verifiable Credentials), préférentiellement demandés par les fournisseurs de service (Service Providers) et validés par le propriétaire.

7. Procédé de communication selon l'une quelconque des revendications précédentes, dans lequel un système de Preuve à divulgation nulle de connaissance, en anglais (ZKP, Zero Knowledge Proof) est mis en place au sein d'un contrat intelligent, en anglais Smart Contract, pour donner des informations sans en dévoiler les valeurs.

8. Système de gestion d'identités sécurisées basé sur une chaine de blocs apte à réaliser les étapes du procédé selon une quelconque des revendications 1 à 7, le système comprenant au moins :
un Fabricant, utilisant un système de diversification de clé à partir de diversifiants générés par un générateur de diversifiants, un système de connexion à une chaine de blocs, un système d'attribution, à chaque objet sorti de fabrication, d'un identifiant, et un arrangement matériel et logiciel pour envoyer au serveur de chaine de blocs un message de publication et d'enregistrement de *l'association* DID - Enc(Kpₘₐₙ,DIV_C∥DIV_ID) .

9. Système de gestion d'identités sécurisées basé sur une chaine de blocs et apte à réaliser les étapes du procédé selon une quelconque des revendications 1 à 7, le système comprenant au moins
Un objet pourvu de moyens de calcul et de moyens de mémorisation d'un programme et de données suffisants pour réaliser les opérations suivantes : lorsque l'objet est allumé pour la première fois, l'objet s'enrôle selon les étapes suivantes :
Génération de ses nouvelles clés symétriques clé de confidentialité K1c et clé d'Identité K1i par diversification de ses anciennes clés K0c, K0i
- Auto-enrôlement par un challenge cryptographique mettant en œuvre la clé d'identité KOi
- Envoi par l'objet au client des deux nouveaux diversifiants chiffré avec la clé publique du client, l'envoi étant réalisé par un mécanisme, en dehors de la base de données de chaines de blocs,
- Publication et enregistrement desdits nouveaux diversifiants chiffré avec la clé publique du client dans la base de données de chaines de blocs.

10. Système de gestion d'identités selon la revendication 8 ou 9, dans lequel un système de partage de clés de confidentialité est mis en place « off-chain », afin que les opérateurs de service aient accès à l'objet, et donc aux informations relatives.

11. Système de gestion d'identités d'un fournisseur de service d'identité (ID service provider) mettant en œuvre une chaîne de blocs « block-chain » et utilisant les objets enregistrés sur un réseau pour remplir des services applicatifs (SA) dans lesquels les informations fournies par les objets sont utilisées, chaque nœud du réseau du fournisseur de service d'identité a accès à un module cryptographique en charge du stockage sécurisé de sa clé privée, les nœuds possédant des clients appelés Acteurs ayant chacun leur propre identité ID_{act} enregistrée dans la chaine de bloc, chaque fabricant d'objet est enregistré dans la chaîne de blocs « block-chain » du fournisseur de service d'identité et leur clé publique sont connues de tous, pour chaque objet vendu ou transféré chaque fabricant fournit l'identifiant de l'objet et le chiffrement des diversifiants utilisés par le fabricant pour le calcul des clés symétriques de chaque objet par publication dans la chaîne de bloc « block-chain », seules les clés symétriques restent stockées en dehors de la chaîne, en l'occurrence dans l'objet ;
Chaque objet étant pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
- Génération dans l'objet de ses nouvelles clés symétriques clé de confidentialité K1c et clé d'Identité K1i par diversification de ses clés anciennes clés K0c, K0i,
- Auto-enrôlement par un challenge cryptographique mettant en œuvre l'ancienne clé d'identité.
- Envoi par l'objet au client des deux nouveaux diversifiants chiffrés avec la clé publique du client, l'envoi étant réalisé par un mécanisme, en dehors de la chaine de blocs,
- Publication et enregistrement desdits nouveaux diversifiants chiffrés avec la clé publique du client dans la chaine de blocs.

12. Un objet étant pourvu de moyens de calcul et de moyens de mémorisation d'un programme et de données suffisants pour exécuter les opérations suivantes : lorsque l'objet est allumé pour la première fois, l'objet s'enrôle auprès du fournisseur de service d'identité en réalisant les étapes suivantes :
- Génération dans l'objet de ses nouvelles clés symétriques clé de confidentialité K1c et clé d'Identité K1i par diversification de ses clés anciennes clés K0c, K0i,
- Auto-enrôlement par un challenge cryptographique mettant en œuvre l'ancienne clé d'identité.
- Envoi par l'objet au client des deux nouveaux diversifiants chiffrés avec la clé publique du client, l'envoi étant réalisé par un mécanisme, en dehors de la chaine de blocs,
- Publication et enregistrement desdits nouveaux diversifiants chiffrés avec la clé publique du client dans la chaine de blocs.

## Patentansprüche

1. Kommunikationsverfahren für das sichere Verwalten von Schlüsseln und Identitäten eines von einem Hersteller hergestellten Objekts, das über ein Schlüsselpaar aus einem öffentlichen Schlüssel Kp, einem privaten oder geheimen Schlüssel des Herstellers (Ksₘₐₙ, Kpₘₐₙ) verfügt, und eines Clients, der über ein Client-Schlüsselpaar (KS_{client}, Kp_{client}) verfügt, **dadurch gekennzeichnet, dass** das Verwalten mindestens teilweise in einer dezentralisierten Blockchain-Datenbank erfolgt und das Verfahren die folgenden Schritte umfasst:
a. Generieren, durch den Hersteller, von zwei diversifizierten symmetrischen Schlüsseln aus seinem Schlüsselpaar und Diversifizierern, beispielsweise in Form von 128-Bit-AES-Schlüsseln, wobei die zwei symmetrischen Schlüssel aus einem Vertraulichkeitsschlüssel K0c und einem Identitätsschlüssel KOi bestehen, und anschließendes gemeinsames Nutzen dieser Schlüssel mit dem Objekt,
b. Veröffentlichen und Aufzeichnen eines dezentralisierten Identifikators (decentralized identifier, DID) des Objekts in der Blockchain-Datenbank und der Verschlüsselung der Diversifizierer, die zum Erhalten der zwei symmetrischen Schlüssel verwendet werden, durch einen öffentlichen Schlüssel Kpₘₐₙ: und Zuordnen des Objektidentifikatorpaars zu der Verschlüsselung des öffentlichen Schlüssels Kpₘₐₙ und verschlüsselten Diversifizierern zum Ausbilden der Informationen DID - Enc(Kpₘₐₙ,DIV_C∥DIV_ID)
und, wenn ein Client das Objekt von dem Hersteller kauft, das Verfahren die folgenden Initialisierungsschritte umfasst:
c. Bereitstellen, durch den Objekthersteller, des Objektidentifikators DID und der symmetrischen Schlüssel Vertraulichkeitsschlüssel K0c und Identitätsschlüssel K0i, wobei die symmetrischen Schlüssel durch den öffentlichen Schlüssel Kp_{client}, durch einen als "Off-Chain" bezeichneten Mechanismus verschlüsselt werden, der außerhalb der Blockchain ist,
d. Aktualisieren der Datenbank-Blockchain durch Veröffentlichung und Zuordnung des Objektidentifikatorpaars *(DID)* in der Blockchain mit dem öffentlichen Schlüssel Kp_{client} des Clients und Verschlüsselung des öffentlichen Client-Schlüssels Kp_{client} und verschlüsselter Diversifizierer zum Ausbilden der Informationen DID-Kp_{client} und Enc(*Kp_{client}*,DIV_C∥DIV_ID), damit der Client die Werte der Schlüssel des Objekts neu berechnen kann.
und, wenn das Objekt zum ersten Mal eingeschaltet wird, das Objekt sich gemäß den folgenden Schritten selbst registriert:
e. Generieren seiner neuen symmetrischen Schlüssel Vertraulichkeitsschlüssel K1c und Identitätsschlüssel K1i durch Diversifizierung seiner alten Schlüssel K0c, K0i;
f. Selbstregistrieren des Objekts, was durch eine kryptografische Abfrage, die den alten Identitätsschlüssel implementiert, durchgeführt wird
g. Senden, durch das Objekt, der zwei neuen Diversifizierer an den Client, die mit dem öffentlichen Schlüssel des Clients verschlüsselt sind, wobei das Senden durch einen als Off-Chain" bezeichneten Mechanismus außerhalb der Blockchain durchgeführt wird
h. Veröffentlichen und Aufzeichnen der neuen Diversifizierer, die mit dem öffentlichen Schlüssel des Clients in der Blockchain verschlüsselt sind.

2. Kommunikationsverfahren nach Anspruch 1, das ferner einen Schritt vor dem Generieren von Herstellerschlüsselpaaren durch den Hersteller umfasst, wobei der Hersteller seinen Herstelleridentifikator in der Blockchain aufzeichnet und seinen öffentlichen Herstellerschlüssel (Kp*ₘₐₙ*) durch Zuordnen dessen zu seinem Herstelleridentifikator veröffentlicht.

3. Kommunikationsverfahren nach einem der vorstehenden Ansprüche, wobei der Schlüsselpaargenerator auf hierarchischen Schlüsselmappen (Hierarchical Key Wallets) basiert, um die Hersteller- und die Client-Schlüsselpaare bereitzustellen.

4. Kommunikationsverfahren nach einem der vorstehenden Ansprüche, wobei die zwei symmetrischen Schlüssel, die durch den Hersteller generiert werden, aus dem IES-Schema (Integration Encryption Scheme oder dem ECIES-Schema (Elliptic Curve Integrated Encryption Scheme), vorzugsweise aus dem ECIES-Schema, stammen, und wobei der Hersteller ein temporäres Schlüsselpaar generiert, dessen öffentlichen Teil er für die Ableitung der zwei generierten symmetrischen Schlüssel verwendet.

5. Kommunikationsverfahren nach einem der vorstehenden Ansprüche, wobei das Objekt durch Wiederholen der Schritte d bis e von einem Besitzer auf einen anderen übertragen wird.

6. Kommunikationsverfahren nach einem der vorstehenden Ansprüche, wobei die gemeinsame Nutzung oder die Verwaltung von Rechten an dem Objekt durch den Eigentümer des Objekts mittels überprüfbarer Berechtigungen (Verifiable Credentials) erfolgt, die vorzugsweise durch die Dienstanbieter (Service Providers) angefordert und durch den Eigentümer validiert werden.

7. Kommunikationsverfahren nach einem der vorstehenden Ansprüche, wobei in einem intelligenten Vertrag, auf Englisch Smart Contract, ein System mit Null-Wissen-Beweis, auf Englisch (Zero Knowledge Proof System, ZKP), implementiert wird, um Informationen bereitzustellen, ohne deren Werte preiszugeben.

8. System zum Verwalten sicherer Identitäten, das auf einer Blockchain basiert und geeignet ist, die Schritte des Verfahrens nach einem der Ansprüche 1 bis 7 durchzuführen, das System mindestens umfassend:
einen Hersteller, der ein Schlüsseldiversifizierungssystem aus Diversifizierern verwendet, die durch einen Diversifizierergenerator generiert werden, ein System für die Verbindung mit einer Blockchain, ein System für die Zuordnung eines Identifikators zu jedem aus der Fertigung hergestellten Objekt und eine Hardware- und Softwareanordnung zum Senden einer Nachricht an den Blockchain-Server zum Veröffentlichen und Aufzeichnen der *Zuordnung* DID - Enc(Kpₘₐₙ,DIV_C∥DIV_ID).

9. System zum Verwalten sicherer Identitäten, das auf einer Blockchain basiert und geeignet ist, die Schritte des Verfahrens nach einem der Ansprüche 1 bis 7 durchzuführen, das System mindestens umfassend:
- ein Objekt, das mit Rechenmitteln und Mitteln zum Speichern eines Programms und von Daten ausgestattet ist, die ausreichen, um die folgenden Operationen durchzuführen: das Objekt registriert sich, wenn das Objekt zum ersten Mal eingeschaltet wird, gemäß den folgenden Schritten:
- Generieren seiner neuen symmetrischen Schlüssel Vertraulichkeitsschlüssel K1c und Identitätsschlüssel K1i durch Diversifizierung seiner alten Schlüssel K0c, KOi
- Selbstregistrieren durch eine kryptografische Abfrage, die den K0i-Identitätsschlüssel implementiert
- Senden, durch das Objekt, der zwei neuen Diversifizierer an den Client, die mit dem öffentlichen Schlüssel des Clients verschlüsselt sind, wobei das Senden durch einen Mechanismus außerhalb der Blockchain-Datenbank durchgeführt wird,
- Veröffentlichen und Aufzeichnen der neuen Diversifizierer, die mit dem öffentlichen Schlüssel des Clients in der Blockchain-Datenbank verschlüsselt sind.

10. Identitätsverwaltungssystem nach Anspruch 8 oder 9, wobei ein System für die gemeinsame Nutzung der Vertraulichkeitsschlüssel "off-chain" eingerichtet wird, sodass die Dienstbetreiber Zugriff auf das Objekt und damit auf die zugehörigen Informationen haben.

11. Identitätsverwaltungssystem eines Identitätsdienstleisters (ID service provider), der eine Blockchain "block-chain" implementiert und die in einem Netzwerk aufgezeichneten Objekte verwendet, um Anwendungsdienste (AS) zu erfüllen, in denen die durch die Objekte bereitgestellten Informationen verwendet werden, wobei jeder Knoten des Netzwerks des Identitätsdienstleisters Zugriff auf ein kryptografisches Modul hat, das für die sichere Speicherung seines privaten Schlüssels verantwortlich ist, wobei die Knoten Clients, die als Akteure bezeichnet werden, jeweils eine eigene Identität ID_{act} aufweist, die in der Blockchain aufgezeichnet ist, jeder Objekthersteller in der Blockchain "block-chain" des Identitätsdienstleisters aufgezeichnet ist und sein öffentlicher Schlüssel allen bekannt ist, für jedes verkaufte oder übertragene Objekt jeder Hersteller den Identifikator des Objekts und die Verschlüsselung der Diversifizierer bereitstellt, die durch den Hersteller für die Berechnung der symmetrischen Schlüssel jedes Objekts durch Veröffentlichung in der Blockchain "block-chain" verwendet werden, wobei nur die symmetrischen Schlüssel außerhalb der Chain gespeichert sind, in diesem Fall in dem Objekt;
wobei jedes Objekt mit Rechenmitteln und Mitteln zum Speichern eines Programms und von Daten ausgestattet ist, die ausreichen, um die folgenden Operationen durchzuführen: das Objekt registriert sich bei Bereitstellung des Identitätsdiensts, wenn das Objekt zum ersten Mal eingeschaltet wird, bei Durchführen der folgenden Schritte:
- Generieren, in dem Objekt, seiner neuen symmetrischen Schlüssel Vertraulichkeitsschlüssel K1c und Identitätsschlüssel K1i durch Diversifizierung seiner alten Schlüssel K0c, K0i,
- Selbstregistrieren durch eine kryptografische Abfrage, die den alten Identitätsschlüssel implementiert.
- Senden, durch das Objekt, der zwei neuen Diversifizierer an den Client, die mit dem öffentlichen Schlüssel des Clients verschlüsselt sind, wobei das Senden durch einen Mechanismus außerhalb der Blockchain durchgeführt wird,
- Veröffentlichen und Aufzeichnen der neuen Diversifizierer, die mit dem öffentlichen Schlüssel des Clients in der Blockchain verschlüsselt sind.

12. Objekt, das mit Rechenmitteln und Mitteln zum Speichern eines Programms und von Daten ausgestattet ist, die ausreichen, um die folgenden Operationen auszuführen: das Objekt registriert sich bei Bereitstellung des Identitätsdiensts, wenn das Objekt zum ersten Mal eingeschaltet wird, bei Durchführen der folgenden Schritte:
- Generieren, in dem Objekt, seiner neuen symmetrischen Schlüssel Vertraulichkeitsschlüssel K1c und Identitätsschlüssel K1i durch Diversifizierung seiner alten Schlüssel K0c, K0i,
- Selbstregistrieren durch eine kryptografische Abfrage, die den alten Identitätsschlüssel implementiert.
- Senden, durch das Objekt, der zwei neuen Diversifizierer an den Client, die mit dem öffentlichen Schlüssel des Clients verschlüsselt sind, wobei das Senden durch einen Mechanismus außerhalb der Blockchain durchgeführt wird,
- Veröffentlichen und Aufzeichnen der neuen Diversifizierer, die mit dem öffentlichen Schlüssel des Clients in der Blockchain verschlüsselt sind.

## Claims

1. A communication method for the secure management of keys and identities of an Object manufactured by a Manufacturer having a Manufacturer key pair of public key Kp, and private or secret key Ks (Ksₘₐₙ, Kpₘₐₙ), and a client having a Client key pair (Ks_{client}, Kp_{client}), **characterized in that** the management is carried out at least partially on a decentralized blockchain database, and **in that** the method comprises the following steps:
a. generation, by the Manufacturer, of two diversified symmetric keys from their key pair and from diversifiers, for example in the form of 128 bit AES keys, the two symmetric keys being composed of a confidentiality key K0c and an identity key K0i, then sharing of said keys with the object.
b. publication and recording, in the blockchain database, of a decentralized identifier (DID) of the object and of the diversifier encryption used to obtain the two symmetric keys by a public key Kpₘₐₙ: and association of the pair identifying the object with the encryption of the public key Kpₘₐₙ and encrypted diversifiers in order to form the information DID - Enc(Kpₘₐₙ,DIV_C∥DIV_ID)
And, when a Client purchases the object from said Manufacturer, the method comprises the following initialization steps:
c. Providing, by the Manufacturer of the object, of the identifier of the object DID, and of the symmetric keys confidentiality key K0c and identity key K0i, the symmetric keys being encrypted by the public client key Kp_{client}, to the client, by a mechanism outside of the blockchain, referred to as "off-chain";
d. Updating the blockchain of the database by publication, and association in said blockchain, of the pair identifying the object *(DID) with* the public client key Kp_{client} and the encryption of the public client key Kp_{client} and the encrypted diversifiers in order to form the information DID-Kp_{client} *and* Enc(*Kp_{client}*,DIV_C∥DIV_ID) so that the client is able to recalculate the values of the object keys.
And, when the object is switched on for the first time, the object auto-enrolls according to the following steps:
e. Generation of its new symmetric keys, confidentiality key K1c and Identity key K1i, by diversification of its former keys K0c, K0i;
f. Auto-enrollment of the object is carried out by a cryptographic challenge implementing the former identity key
g. Sending, by the object to the client of the two new encrypted diversifiers with the public client key, the sending being carried out by a mechanism outside of the blockchain, referred to as "off-chain"
h. Publication and recording of said new encrypted diversifiers with the public client key in the blockchain.

2. The communication method according to claim 1, which further comprises a step prior to the generation of the manufacturing key pairs by the Manufacturer, wherein said Manufacturer records their Manufacturer identifier in the blockchain and publishes their public Manufacturer key (Kp*ₘₐₙ*) by associating it with its Manufacturer identifier.

3. The communication method according to either one of the preceding claims, wherein the key pair generator is based on Hierarchical Key Wallets to provide Manufacturer and Client key pairs.

4. The communication method according to any one of the preceding claims, wherein the two symmetric keys generated by the Manufacturer result from the IES scheme (Integration Encryption Scheme) or from the ECIES scheme (Elliptic Curve Integrated Encryption Scheme), preferentially from the ECIES scheme, and where the Manufacturer generates a temporary key pair, the public part of which they use for deriving said two generated symmetric keys.

5. The communication method according to any one of the preceding claims, wherein the object is transferred from one owner to another by reiterating steps d to e.

6. The communication method according to any one of the preceding claims, wherein sharing or managing the rights to the object is performed by the owner of the object by means of Verifiable Credentials, preferentially requested by the Service Providers and validated by the owner.

7. The communication method according to any one of the preceding claims, wherein a Zero Knowledge Proof (ZKP) system is established within a Smart Contract, in order to give information without revealing the values thereof.

8. A system for managing secure identities based on a blockchain, able to carry out the steps of the method according to any one of claims 1 to 7, the system comprising at least:
a Manufacturer, using a key diversification system based on diversifiers generated by a diversifier generator, a system for connecting to a blockchain, a system for attributing an identifier to each object leaving manufacturing, and a hardware and software arrangement in order to send, to the blockchain server, a message of publication and of recording of the *association* DID - Enc(Kpₘₐₙ,DIV_C∥DIV_ID).

9. A system for managing secure identities based on a blockchain and able to carry out the steps of the method according to any one of claims 1 to 7, the system comprising at least
An object provided with computation means and means for storing in memory a program and sufficient data to carry out the following operations: when the object is switched on for the first time, the object auto-enrolls according to the following steps:
Generation of its new symmetric confidentiality key K1c and Identity key K1i by diversification of its former keys K0c, KOi
- Auto-enrollment by a cryptographic challenge implementing the identity key KOi
- Sending, by the object to the client, of the two new encrypted diversifiers with the public client key, the sending being carried out by a mechanism outside of the blockchain database,
- Publication and recording of said new encrypted diversifiers with the public client key in the blockchain database,

10. The identity management system according to claim 8 or 9, wherein a system for sharing confidentiality keys is established "off chain", in order for service operators to have access to the object and therefore to the related information.

11. An identity management system of an identity (ID) service provider, implementing a blockchain and using the objects recorded on a network to fulfill application services (AS) in which the information provided by the objects are used, each node of the network of the identity service provider has access to a cryptographic module responsible for the secure storage of the private key thereof, the nodes having clients referred to as Stakeholders, each having their own identity ID_{act} recorded in the blockchain, each object manufacturer is recorded in the blockchain of the identity service provider and their public manufacturing keys are known to everybody; for each object sold or transferred each manufacturer provides the identifier of the object and the encryption of the diversifiers used by the manufacturer for the calculation of the symmetric key pairs of each object by publishing in the blockchain, only the symmetric keys remain stored outside of the chain, in this instance in the object;
Each object being provided with computation means and means for storing in memory a program and sufficient data to execute the following operations: when the object is switched on for the first time, the object auto-enrolls with the identity service provider by carrying out the following steps:
- Generation, in the object, of its new symmetric keys confidentiality key K1c and Identity key K1i by diversification of its former keys K0c, K0i;
- Auto-enrollment by a cryptographic challenge implementing the former identity key.
- Sending, by the object to the client, of the two new encrypted diversifiers with the public client key, the sending being carried out by a mechanism, outside of the blockchain,
- Publication and recording of said new encrypted diversifiers with the public client key in the blockchain.

12. An object, being provided with computation means and means for storing in memory a program and sufficient data to execute the following operations:
when the object is switched on for the first time, the object auto-enrolls with the identity service provider by carrying out the following steps:
- Generation, in the object, of its new symmetric keys, confidentiality key K1c and Identity key K1i by diversification of its former keys K0c, KOi
- Auto-enrollment by a cryptographic challenge implementing the former identity key.
- Sending, by the object to the client, of the two new encrypted diversifiers with the public client key, the sending being carried out by a mechanism, outside of the blockchain,
- Publication and recording of said new encrypted diversifiers with the public client key in the blockchain.
